Europäisches Patentamt

European Patent Office

Office européen des brevets

(19)

(11) Numéro de publication: **0 022 403 B1**

(12) # FASCICULE DE BREVET EUROPEEN

(45) Date de publication du fascicule du brevet:
**21.09.83**

(51) Int. Cl.³: **B 23 D 33/10** // B21D5/00

(21) Numéro de dépôt: **80400991.8**

(22) Date de dépôt: **01.07.80**

(54) **Dispositif indicateur de cote destiné à équiper une machine-outil de formage ou de cisaillage de métaux en feuilles.**

(30) Priorité: **05.07.79 FR 7917458**

(43) Date de publication de la demande:
**14.01.81 Bulletin 81/2**

(45) Mention de la délivrance du brevet:
**21.09.83 Bulletin 83/38**

(84) Etats contractants désignés:
**AT BE CH DE GB IT LI NL SE**

(56) Documents cités:
**FR-A-2 114 032**
**US-A-2 921 377**

(73) Titulaire: **PROMECAM SISSON-LEHMANN, 63, rue de Strasbourg, F-93206 Saint-Denis (FR)**

(72) Inventeur: **Cros, Pierre Georges, 92, rue Tahere, F-92210 Saint-Cloud (FR)**

(74) Mandataire: **Tony-Durand, Serge, Cabinet Tony-Durand 22, Boulevard Voltaire, F-75011 Paris (FR)**

ACTORUM AG

**Dispositif indicateur de cote destiné à équiper une machine-outil de formage ou de cisaillage de métaux en feuilles**

La présente invention concerne les dispositifs indicateurs de cote destinés à équiper des machines-outils de formage ou de cisaillage de métaux en feuilles. Les dispositifs de ce genre comportent un appareil de mesure apte à indiquer la distance de la butée réglable de positionnement de la tôle sur la machine et ce, par rapport à un plan de référence, tel que le plan de pliage ou de cisaillage.

Sur une machine connue de ce type, le déplacement de la butée de positionnement est habituellement assuré par un mécanisme vis-écrou qui est en général double. La butée est alors solidaire de deux écrous immobilisés en rotation, et dans lesquels sont engagées deux vis rotatives de commande. Ainsi, il suffit de commander la rotation de ces vis, dans un sens ou dans l'autre, pour obtenir l'avancement ou le recul de la butée de positionnement. A cet effet, l'une de ces vis peut être actionnée au moyen d'un moteur ou d'un organe de commande, par exemple une manivelle, cependant que l'autre vis est accouplée à celle-ci par une liaison mécanique appropriée.

Dans ces conditions, l'appareil de mesure du dispositif indicateur de cote peut consister en un compteur mécanique ou électronique, contrôlant les mouvements de rotation de l'une des vis commandant le déplacement de la butée de positionnement. Il est alors prévu un rapport d'entraînement tel que les indications du compteur puissent représenter la mesure du déplacement de la butée de positionnement. Bien entendu, il convient de procéder à une opération d'étalonnage consistant à mettre le compteur à zéro lorsque la butée de positionnement se trouve dans le plan de référence qui correspond habituellement au plan de pliage ou de cisaillage de la tôle.

Cependant, pour des raisons technologiques, la position de ce plan de référence peut être modifiée ultérieurement, ce qui oblige à effectuer une nouvelle opération d'étalonnage. Par exemple, sur une cisaille à tôle, il faut modifier le jeu entre les lames en fonction de l'épaisseur de la tôle à couper, et ceci entraîne une modification de la position du plan de référence de l'emplacement de la butée.

En conséquence, pour que le dispositif indicateur de cote d'une cisaille reste opérationnel, l'opérateur est astreint à procéder à une nouvelle opération d'étalonnage chaque fois qu'il modifie le jeu entre les lames. Or, le même problème existe dans le cas d'une presse-plieuse lors d'une modification du réglage.

C'est pourquoi la présente invention a pour but de réaliser un dispositif indicateur de cote pour machines-outils du type en cause dont la conception est telle que les indications fournies par celui-ci restent valables, même après modification de la position du plan de référence à la suite d'un réglage du fonctionnement de la machine correspondante.

Le dispositif indicateur de cote visé par l'invention comporte un appareil de mesure apte à indiquer la distance de la butée réglable de positionnement de la tôle à usiner par rapport à un plan de référence, tel que le plan de pliage ou de cisaillage, susceptible d'être déplacé lors de la manœuvre du système de réglage de la machine.

Suivant l'invention, ce dispositif est essentiellement caractérisé en ce qu'il comprend un système de correction de l'effet d'un déplacement du plan de référence, comportant des moyens mécaniques accouplés avec l'organe de réglage du jeu entre les outils de la machine et susceptibles d'agir directement ou indirectement sur l'un des éléments des moyens de liaison ou de transmission de données, entre l'organe de manœuvre de la butée de positionnement et l'appareil de mesure, de façon à corriger automatiquement l'étalonnage de ce dernier.

Dans une forme de réalisation avantageuse du présent dispositif, le système de correction de celui-ci comporte un levier pivotant autour d'un axe fixe et dont une extrémité est attelée, au moyen d'un mécanisme à biellette, à l'arbre rotatif de l'organe de réglage des outils de la machine cependant que son extrémité opposée est accouplée avec les moyens de liaison, ou de transmission de données existant entre l'organe de manœuvre de la butée de positionnement et l'appareil de mesure.

Cependant, ce système de correction peut faire l'objet de diverses formes de réalisation et ce, en fonction notamment du type de l'appareil de mesure faisant partie du dispositif indicateur de cote, cet appareil de mesure pouvant avantageusement consister en un compteur mécanique ou électronique.

Du reste, certaines des formes de réalisation possibles du dispositif selon l'invention sont décrites ci-dessous en référence au dessin annexé à simple titre indicatif, et sur lequel:

la fig. 1 est une vue schématique en coupe transversale d'une cisaille équipée d'un dispositif selon l'invention;

les figs 2 et 3 sont des vues schématiques partielles en coupe de deux autres types de cisailles, équipées d'un tel dispositif;

La fig. 4 est une vue en perspective du dispositif de cote équipant la cisaille représentée à la fig. 1;

les figs 5 et 6 sont des vues en perspective de deux autres formes de réalisation d'un dispositif indicateur de cote selon l'invention.

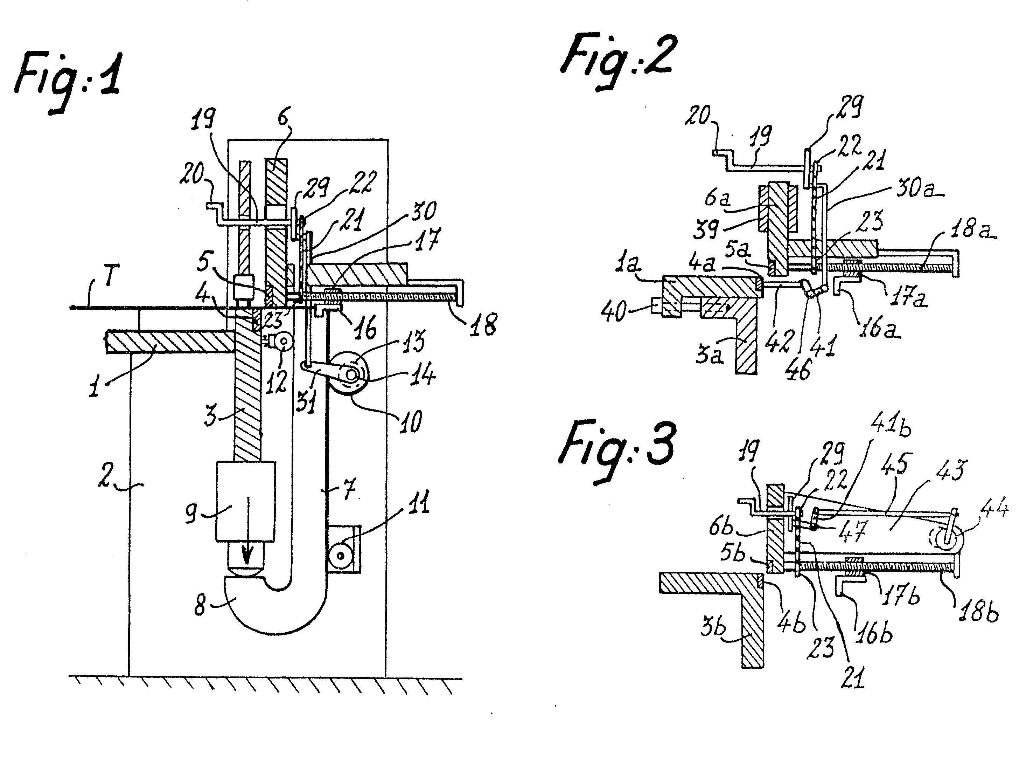

La cisaille représentée à la fig. 1 est du type dans lequel le tablier de la lame mobile se déplace dans un plan vertical et le réglage du jeu entre les deux lames est obtenu par modification ou deplacement des organes de guidage de ce tablier. Du reste, cette cisaille peut être avantageusement similaire à celle faisant l'objet du brevet FR-A-2 432 359 de la société demanderesse.

Cette cisaille comporte une table 1 solidaire de deux flasques verticaux 2, faisant partie du bâti. Ceux-ci portent également un sommier fixe 3 servant de support à la lame fixe 4 de cette cisaille. Quant à l'autre lame 5 de celle-ci, elle est portée par un tablier mobile 6, actionné et guidé de la même façon que dans la cisaille décrite dans le brevet FR-A-2 432 359 rappelé précédemment.

En conséquence, le tablier mobile 6 est porté par deux montants verticaux mobiles 7, situés au-dessous de ses deux bords latéraux et qui sont donc placés respectivement contre l'un et l'autre des flasques 2 du bâti. Les extrémités inférieures 8 de ces montants sont coudées en forme de crosse renversée et placées au contact du piston d'un vérin de commande 9.

Chacun des montants latéraux 7 est guidé, sur un côté, par deux paires de galets respectivement 10 et 11, disposés l'un en dessous de l'autre. Du côté opposé, il est simplement prévu un galet presseur 12, soumis à l'action d'un ou plusieurs ressorts de poussée. Le galet supérieur 10 de guidage est monté rotatif autour d'un disque 13 formant un «excentrique» dont la rotation sur lui-même permet de déplacer, d'avant en arrière, la position de la ligne de contact entre le galet de guidage 10 et la face respective du montant 7 correspondant. Or, c'est ce déplacement qui permet de régler le jeu existant entre les deux lames 4 et 5 de la cisaille, lequel doit être modifié en fonction de l'épaisseur de la tôle T à couper.

L'excentrique de commande 13 est solidaire d'un arbre de commande 14 portant une manivelle (non représentée) ou tout autre organe de manœuvre approprié. Ainsi, en faisant tourner cet excentrique sur lui-même, il est effectivement possible de modifier le jeu entre les deux lames 4 et 5.

La présente cisaille comporte par ailleurs une traverse 16 disposée derrière le plan de coupe, et qui est destinée à servir de butée de positionnement pour la tôle T à couper. Cette traverse est donc mobile d'avant en arrière et sa position est réglable. A cet effet, elle porte deux écrous 17 immobilisés en rotation, et à l'intérieur desquels sont engagées des vis rotatives de commande 18. L'une de celles-ci peut être entraînée en rotation au moyen d'un mécanisme de commande approprié ou par un moteur. Dans l'exemple représenté, il est prévu un mécanisme de commande à entraînement manuel. Celui-ci comprend un arbre rotatif 19 pourvu d'une poignée de manœuvre 20 et dont l'extrémité opposée est accouplée avec la vis correspondante 18. Cet accouplement peut être assuré par une courroie crantée 21, passant sur des poulies 22 et 23, portées respectivement par l'arbre d'entraînement 19 et par la vis 18.

Quant à la seconde vis 18, qui n'est pas représentée sur le dessin annexé, elle est reliée à la première par un mécanisme de liaison approprié. Ainsi, il suffit de faire tourner l'arbre 19 dans un sens ou dans l'autre pour faire avancer ou reculer la butée de positionnement 16.

Un dispositif indicateur de cote selon l'invention est associé à ce système de positionnement de la tôle. Ce dispositif comporte donc un appareil de mesure susceptible d'indiquer la distance de la butée réglable 16 par rapport à un plan de référence, par exemple le plan de cisaillage.

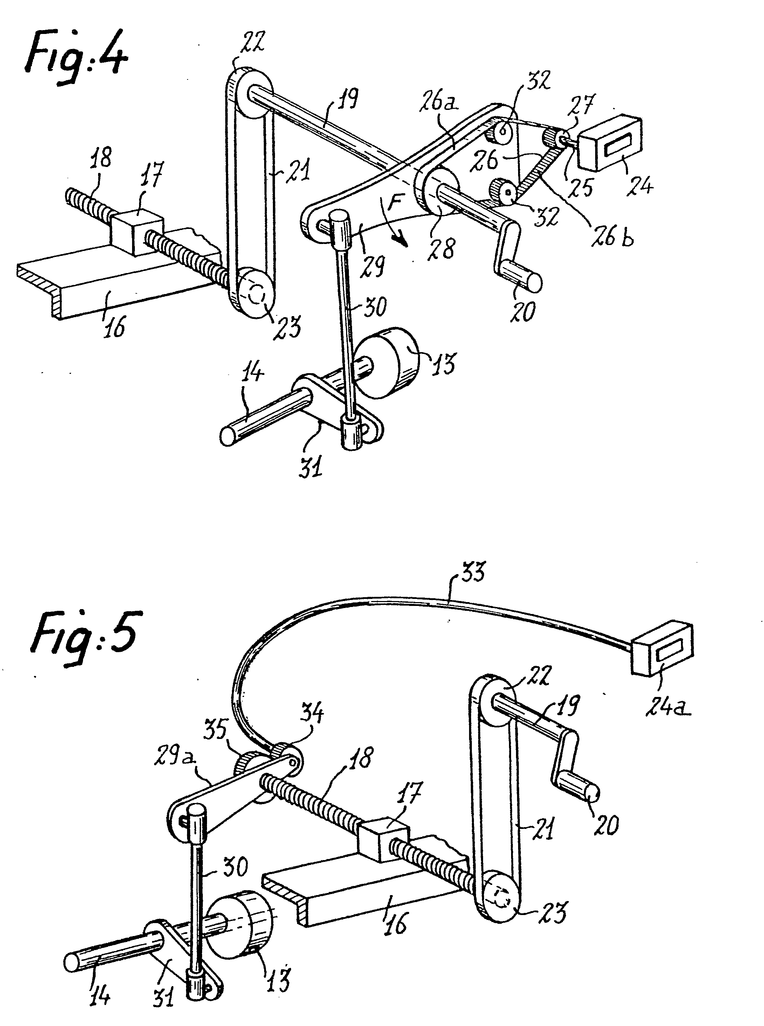

Dans l'exemple représenté à la fig. 4, cet appareil de mesure consiste un un compteur mécanique 24, dont l'arbre d'entrée 25 est accouplé avec l'arbre 19 de commande de la butée réglable de positionnement et ce par l'intermédiaire d'une courroie crantée 26 ou d'une chaîne de transmission, passant sur des poulies, respectivement 27 et 28 solidaires de ces deux arbres.

Cependant, conformément à l'objet de l'invention, le présent dispositif indicateur comprend un système de correction destiné à corriger l'effet du déplacement du plan de référence, en l'occurrence dans le cas présent, un déplacement du plan de coupe à la suite d'une modification du jeu prévu entre les lames 4 et 5. A cet effet, ce système de correction est conçu de façon à décaler le zéro du compteur de mesure 24 dans un sens ou dans l'autre, suivant le cas.

Dans l'exemple décrit, ce système de correction comprend un levier 29 monté pivotant autour de l'arbre 19 et dont une extrémité est attelée à l'arbre 14 de commande du réglage du jeu entre les lames et ce, par l'intermédiaire d'une biellette 30 et d'un maneton 31. Quant à l'extrémité opposée de ce levier, elle porte deux poulies 32 sur lesquelles passe la courroie 26. Du reste, ces poulies assurent la tension des deux brins 26a et 26b de cette courroie.

Le présent dispositif indicateur de cote fonctionne de façon normale. En effet, lorsque l'on déplace la butée 16 de positionnement par rotation de l'arbre de commande 19, ceci a pour effet d'entraîner l'arbre d'entrée 25 du compteur par l'intermédiaire de la courroie 26. Or, le rapport d'entraînement est tel que les indications fournies par ce compteur représentent la distance de la butée de positionnement par rapport au plan de référence, en l'occurrence le plan de coupe.

Cependant si, à la suite d'une modification du jeu prévu entre les lames 4 et 5, la position de ce plan se trouve déplacée, le système de correction prévu dans le présent dispositif assure automatiquement une compensation du décalage en résultant. En effet, dans un tel cas, la rotation de l'arbre 14 de réglage du jeu entre les lames a pour effet de commander le pivotement du levier 29 dans le sens correspondant, ce qui provoque une rotation de l'arbre d'entrée 25 du compteur. Ainsi, si le levier 29 est amené à pivoter dans le sens de la flèche F, il en résulte un déplacement des deux poulies tendeuses 32 vers le haut. Or, ceci entraîne un allongement du brin supérieur 26a et une réduction concomitante du brin inférieur 26b de la courroie 26, et par suite, une rotation de la poulie 27 et de l'arbre 25 d'entrée du compteur.

Bien entendu, il convient de prévoir des dimensions de poulies et d'entraxes, déterminées judicieusement pour que l'allongement du brin supérieur 26a soit égal au raccourcissement du brin inférieur 26b, afin de maintenir tendue la courroie 26, tout en provoquant une légère rotation de la poulie 27 susceptible d'assurer le décalage souhaité du zéro sur le compteur 24. Naturellement, le pivotement du levier 29 dans le sens inverse assure un décalage similaire du zéro du compteur, mais dans l'autre sens.

En conséquence, le système de correction prévu dans le présent dispositif indicateur de cote évite à l'opérateur d'avoir à procéder à un nouvel étalonnage de ce dispositif, chaque fois que le plan de référence se trouve déplacé à la suite d'une modification du réglage du jeu à prévoir entre les lames.

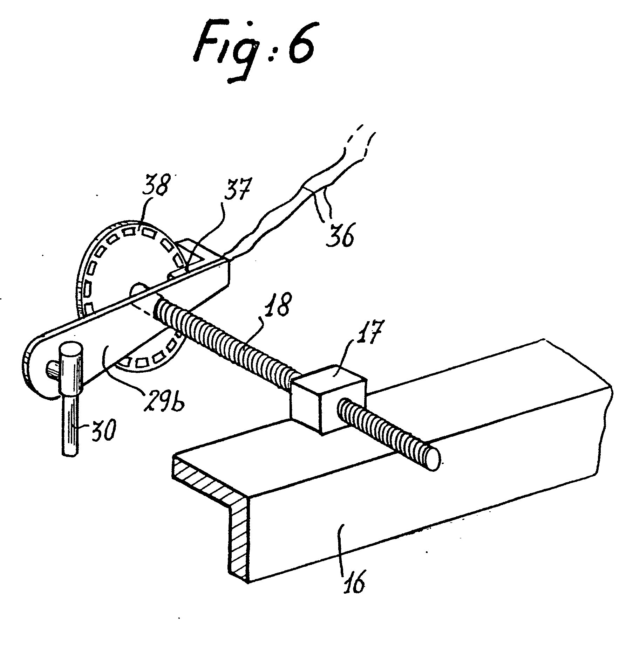

Les figs 5 et 6 représentent deux autres formes de réalisation du dispositif selon l'invention.

Dans le cas illustré à la fig. 5, l'appareil de mesure de ce dispositif consiste également en un compteur mécanique 24a. Cependant, celui-ci est entraîné par un câble flexible 33 dont l'extrémité opposée est solidaire d'un pignon 34 engrenant avec un pignon d'entraînement 35. Ce dernier est porté par la vis 18 dont la rotation commande le déplacement de la butée 16 de positionnement, prévue sur la cisaille correspondante. Ainsi, la rotation de cette vis assure également l'entraînement du compteur 24a dans un rapport tel que les indications fournies par celui-ci représentent l'écart de la butée mobile par rapport au plan de référence.

Dans cette forme de réalisation du présent dispositif, le système de correction prévu pour assurer la compensation d'un déplacement de ce plan, comprend comme précédemment, un levier pivotant 29a dont une extrémité est accouplée à l'arbre 14 de commande du réglage du jeu entre les lames, cet accouplement étant assuré par l'intermédiaire d'une bielle 30 et d'un maneton 31. Ce levier est monté pivotant autour de la vis 18 et son extrémité opposée sert de support au pignon 34 solidaire du câble 33 assurant l'entraînement du compteur.

Dans ces conditions, tout pivotement du levier 29a dans un sens ou dans l'autre, sous l'effet d'une rotation de l'arbre de commande 14, provoque un changement de position du pignon 34 autour de la périphérie du pignon d'entraînement 35. Or, comme ces deux pignons engrènent l'un avec l'autre, ceci entraîne une rotation du pignon 34 dans un sens ou dans l'autre et par suite, un décalage correspondant du zéro du compteur 24a. On obtient donc de la sorte le même résultat que dans le cas précédent.

Dans la forme de réalisation représentée à la fig. 6, l'appareil de mesure du dispositif indicateur de cote correspondant consiste en un compteur électronique (non représenté) relié, par des conducteurs électriques 36, à un capteur d'impulsions prévu en bout de la vis rotative 18 commandant la butée de positionnement 16. Ce capteur d'impulsions peut consister en une cellule photoélectrique 37 associée à un projecteur lumineux, ces deux organes étant disposés de part et d'autre de la périphérie d'un disque alvéolé 38, solidaire de la vis 18. Ainsi, la cellule 37 capte les impulsions fournies par ce disque dans sa rotation, de sorte que le compteur électronique est effectivement en mesure d'indiquer l'écart de la butée de positionnement 16 par rapport au plan de référence.

Le système de correction prévu dans ce dispositif comprend, comme précédemment, un levier pivotant 29b dont une extrémité est accouplée par l'intermédiaire d'une bielle 30 et d'un maneton (non représenté) à l'arbre 14 commandant le réglage du jeu entre les deux lames de la cisaille. Ce levier est monté pivotant autour de la vis 18 et son extrémité opposée sert de support à la cellule 37 du capteur d'impulsions. Celle-ci peut donc prendre une orientation angulaire variable lors du pivotement du levier 29b.

Or, ce pivotement se produit dans un sens ou dans l'autre, chaque fois que l'arbre 14 de réglage entre les lames est lui-même actionné. En conséquence, ceci entraîne une variation correspondante de la position de la cellule 37, et par suite, un décalage du zéro du compteur électronique associé à celle-ci.

Cependant, il est bien évident que les formes de réalisation décrites ci-dessus ne constituent que des exemples possibles d'exécution du dispositif selon l'invention. En effet, celui-ci peut faire l'objet de nombreuses autres formes de réalisation différentes suivant le type de l'appareil de mesure prévu dans ce dispositif, et les moyens de liaison entre cet appareil et l'organe de commande du déplacement de la butée de positionnement de la tôle.

Dans ces divers cas, il faut et il suffit que les systèmes cinématiques de transmission prévus dans le système de correction, soient approximativement linéaires, ce qui est facile puisque les déplacements sont de très faible valeur.

Par ailleurs, il convient de noter que le dispositif indicateur selon l'invention peut équiper des cisailles de divers types. Ainsi, le présent dispositif peut équiper des cisailles de type différent de celle représentée à la fig. 1. Du reste, la fig. 2 est une vue partielle en coupe d'une cisaille d'un type différent, équipée d'un tel dispositif.

Dans cette cisaille, le tablier 6a portant la lame mobile 5a est guidé dans des glissières verticales fixes 39; et le réglage du jeu entre les deux lames de coupe est réalisé par déplacement d'une table 1a servant de support à la lame fixe 4a. A cet effet, cette table est montée mobile d'avant en arrière sur le tablier fixe 3a de la cisaille et son déplacement peut être commandé par des vis de réglage 40.

Le mécanisme de commande de la butée réglable 16a de positionnement de la tôle est le même que celui prévu sur la cisaille représentée à la fig. 1. En effet, cette butée porte deux écrous 17a, immobilisés en rotation, et montés sur des vis rotatives 18a dont l'une est entraînée en rotation par un moteur ou un mécanisme approprié. Dans l'exemple représenté, il s'agit d'un mécanisme comprenant un arbre 19 portant une manivelle de manœuvre 20 et qui est accouplé avec la vis 18a correspondante au moyen d'une courroie 21. Ce mécanisme est associé à un dispositif indicateur de cote pourvu d'un système de correction conformément à l'objet de l'invention. Ce dispositif peut être conforme à l'une ou l'autre des formes de réalisation représentées aux figs 4, 5 et 6.

Dans l'un ou l'autre de ces cas, il comporte donc un levier pivotant 29 (ou respectivement 29a, 29b) dont une extrémité est apte, par son déplacement, à provoquer le décalage du zéro sur l'appareil de mesure correspondant. Quant à l'extrémité opposée de ce levier, elle est accouplée avec le mécanisme de réglage du jeu entre les lames.

Cependant, dans le cas de la cisaille représentée à la fig. 2, cet accouplement est évidemment réalisé d'une façon différente de celle prévue sur la cisaille illustrée à la fig. 1. En l'occurrence, l'extrémité correspondante du levier pivotant 29 (ou 29a, 29b) est reliée par l'intermédiaire de deux bielles 30a et 42, à la table mobile 1a portant la lame fixe 4a. Les deux bielles 30a et 42 sont elles-mêmes reliées par un renvoi d'équerre constitué par un levier coudé 41 monté pivotant autour d'un axe fixe 46.

Ainsi tout déplacement de cette table dans un sens ou dans l'autre, en vue de modifier le jeu entre les lames, a pour effet de provoquer un pivotement du levier 29 (ou 29a, 29b) dans le sens correspondant. Ceci entraîne donc automatiquement un décalage du zéro sur l'appareil de mesure du dispositif indicateur de cote.

La fig. 3 représente un autre type de cisaille équipée d'un dispositif selon l'invention. Dans ce cas, il s'agit d'une cisaille dont le tablier mobile 6b comprend deux joues latérales 43, montées articulées sur des tourillons excentrés 44. La lame fixe étant portée par un tablier 3b dont la position est immuable, c'est donc en faisant tourner les tourillons excentrés 44 sur eux-mêmes que l'on peut modifier le réglage du jeu entre les lames en provoquant le recul ou l'avance de la lame mobile 5b par rapport à la lame fixe.

Le mécanisme de commande de la butée de positionnement 16b de cette cisaille est le même que précédemment. En conséquence, celui-ci comporte un arbre de commande 19 susceptible d'entraîner l'une des vis de commande 18 et ce, par l'intermédiaire d'une courroie 21.

Ce mécanisme est associé à un dispositif indicateur de cote pourvu d'un système de correction, apte à compenser l'effet d'un décalage du plan de référence. Comme précédemment, ce système de correction comprend un levier pivotant 29 (ou 29a, 29b) dont une extrémité est susceptible, par son déplacement, de provoquer le décalage du zéro sur l'appareil de mesure du dispositif indicateur correspondant. Quant à l'extrémité opposée de ce levier, elle est accouplée avec le mécanisme de commande du réglage du jeu entre les lames.

Dans le cas présent, cet accouplement est assuré par une bielle 45 assurant une liaison mécanique appropriée entre le levier 29 et les tourillons excentrés 44 commandant le réglage du jeu entre les lames, cette bielle étant accouplée avec le levier 29 au moyen d'un renvoi d'équerre constitué par un levier coudé 41b monté pivotant autour d'un axe fixe 47. Ainsi, l'agencement est tel que la rotation de ces tourillons dans un sens ou dans l'autre, en vue de modifier le jeu entre les lames, a pour effet de provoquer le pivotement du levier 29 dans le sens correspondant, et par suite, un décalage approprié du zéro de l'appareil de mesure prévu dans le dispositif indicateur de commande.

Mais encore une fois, le dispositif selon l'invention peut faire l'objet de nombreuses autres formes de réalisation, en fonction notamment du type des cisailles sur lesquelles il est appliqué, ainsi que de la nature des appareils de mesure prévus pour indiquer la position de la butée de positionnement et du mode de liaison des appareils avec le mécanisme de commande de la butée de positionnement. Ainsi, dans le cas illustré à la fig. 4, l'arbre d'entrée du compteur 24 est relié à l'arbre 19 de commande du mécanisme de déplacement de la butée 16, mais il pourrait être accouplé à l'une des vis 18, auquel cas le système de correction serait modifié en conséquence. Ceci est du reste le cas dans l'exemple illustré à la fig. 5, où le câble 33 pourrait être éventuellement accouplé avec l'arbre de commande 19 au lieu de l'être avec la vis 18. De façon similaire, dans l'exemple illustré à la fig. 6, le détecteur d'impulsions pourrait être monté sur l'arbre de commande de la vis 18 et non directement sur celle-ci.

Par ailleurs, il faut observer que ce dispositif peut équiper toutes machines-outils pour le travail de la tôle autres que celles de cisailles. En l'occurrence, il peut équiper des machines de formage telles que presses-plieuses.

**Revendications**

1. Dispositif indicateur de cote destiné à équiper une machine-outil de formage ou de cisaillage de métaux en feuilles, comportant un appareil de mesure (24, 24a) apte à indiquer la distance de la butée réglable (16) de positionnement de la tôle à usiner par rapport à un plan de référence, tel que le plan de pliage ou de cisaillage, susceptible d'être déplacé lors de la manœuvre du système (14) de réglage de la machine, caractérisé en ce que ce dispositif indicateur comprend un système de correction de l'effet d'un déplacement du plan de référence, comportant des moyens mécaniques (29, 19, 30, 31; 33, 34, 35, 18) accouplés avec l'organe de réglage du jeu entre les outils (4, 5) de la machine et susceptibles d'agir, directement ou indirectement, sur l'un des éléments des moyens de liaison, ou de transmission de données, entre l'organe de manœuvre (20) de la butée (16) de positionnement et l'appareil de mesure (24, 24a) de façon à corriger automatiquement l'étalonnage de ce dernier.

2. Dispositif suivant la revendication 1, caractérisé en ce que le système de correction comprend un levier (29) pivotant autour d'un axe fixe (19) et dont une extrémité est attelée, au moyen d'un mécanisme à biellette (30, 31) à l'arbre rotatif (14) de l'organe de réglage des outils (4, 5) de la machine, cependant que son extrémité opposée est accouplée avec les moyens de liaison, ou de transmission de données, entre l'organe de ma-

nœuvre (20) de la butée (16) de positionnement et l'appareil de mesure (24).

3. Dispositif selon la revendication 2 dans lequel l'appareil de mesure consiste en un compteur mécanique (24) dont l'arbre d'entrée (25) est relié à l'arbre rotatif (19) de l'organe de manœuvre (20) de la butée (16) de positionnement par une courroie ou similaire, caractérisé en ce que le levier (29) du système de correction est monté pivotant autour de l'arbre (19) de l'organe de manœuvre (20) de la butée (16) de positionnement, et son extrémité opposée à celle accouplée avec l'organe de réglage de la machine porte deux poulies (32) assurant la tension de deux brins (26a, 26b) de courroie de transmission, l'agencement étant tel que le pivotement de ce levier (29) dans un sens ou dans l'autre provoque une rotation correspondante de l'arbre (25) d'entrée du compteur (24).

4. Dispositif selon la revendication 2 dans lequel l'appareil de mesure consiste en un compteur mécanique (24a) relié à l'arbre rotatif (19) de l'organe de manœuvre (20) de la butée (16) de positionnement par un câble flexible (33) solidaire d'un pignon (34) engrenant avec un pignon d'entraînement (35) porté par l'une des vis (18) d'entraînement de la butée (16) de positionnement, ou par l'arbre de commande de celle-ci, caractérisé en ce que le premier pignon (34) est porté par l'extrémité du levier (29a) du système de correction, qui est opposée à celle accouplée avec l'organe de réglage (14) de la machine, et ce levier (29a) est monté pivotant autour de l'organe (18) portant le pignon d'entraînement (35), l'agencement étant tel que le pivotement de ce levier (29a) dans un sens ou dans l'autre provoque ainsi une rotation correspondante du pignon (34) solidaire du câble (33) d'entraînement du compteur (24a).

5. Dispositif selon la revendication 2 dans lequel l'appareil de mesure consiste en un compteur électronique relié à un capteur d'impulsions comportant une cellule (37) contrôlant un élément rotatif (38) solidaire de l'une (18) des vis d'entraînement de la butée (16) de positionnement, ou de l'arbre de commande de celle-ci, caractérisé en ce que cette cellule (37) est portée par l'extrémité du levier (29b) du système de correction, qui est opposée à celle accouplée avec l'organe (14) de réglage de la machine, et ce levier (29b) est monté pivotant autour de l'organe (18) portant l'élément rotatif (38) contrôlé par ladite cellule (37), l'agencement étant tel que le pivotement de ce levier (29b) dans un sens ou dans l'autre provoque ainsi un déplacement angulaire correspondant de la cellule (37) par rapport à l'élément rotatif (38) contrôlé par elle.

6. Machine-outil de formage ou de cisaillage de métaux en feuilles pourvue d'un dispositif indicateur de cote comportant un appareil de mesure (24, 24a) apte à indiquer la distance de la butée (16) réglable de positionnement de la tôle à usiner par rapport à un plan de référence, tel que le plan de pliage ou de cisaillage, susceptible d'être déplacé lors de la manœuvre du système de réglage de la machine, caractérisée en ce que ce dispositif indicateur est conforme à celui faisant l'objet de l'une des revendications précédentes.

## Claims

1. Gauge setting device which is intended to equip a machine-tool for sheet-metal forming or shearing, comprising a measuring apparatus (24, 24a) which is suited to indicate the distance of the adjustable stop (16) for positioning the metal sheet to be machined with respect to a reference plane such as the folding or shearing plane, which is capable of being displaced at the time of operation of the system (14) for adjusting the machine, characterized in that this setting device comprises a system for correcting the effect of a displacement of the reference plane, comprising mechanical means (29, 19, 30, 31; 33, 34, 35, 18) which are coupled with the member for adjusting the clearance between the tools (4, 5) of the machine and are capable of acting directly or indirectly on one of the elements of the means for connecting or for transmission of data between the member (20) for actuating the positioning stop (16) and the measuring apparatus (24, 24a) in order to correct the calibration of this latter automatically.

2. Device in accordance with claim 1, characterized in that the correcting system comprises a lever (29) which pivots about a stationary shaft (19) and one end of which is coupled by means of a crank mechanism (30, 31) to the rotating shaft (14) of the member for adjusting the tools (4, 5) of the machine whilst its opposite end is coupled with the means for connecting or for data transmission between the member (20) for actuating the positioning stop (16) and the measuring apparatus (24).

3. Device in accordance with claim 2, in which the measuring apparatus consists of a mechanical counter (24), the input shaft (25) of which is coupled to the rotating shaft (19) of the member (20) for actuating the positioning stop (16) by means of a belt or the like, characterized in that the lever (29) of the correcting system is pivotally mounted about the shaft (19) of the actuating member (20) of the positioning stop (16) and its end opposite to that which is coupled with the member for adjusting the machine carries two pulleys (32) for tensioning the two driving-belt runs (26a, 26b), the arrangement being such that the pivotal displacement of this lever (29) in one direction or in the other produces a corresponding rotation of the input shaft (25) of the counter (24).

4. Device in accordance with claim 2, in which the measuring apparatus consists of a mechanical counter (24a) coupled to the rotating shaft (19) of the actuating member (20) of the positioning stop (16) by means of a flexible cable (33) attached to a pinion (34) disposed in meshing engagement with a driving pinion (35) carried by one of the screws (18) for actuating the positioning stop (16) or by the shaft which controls this latter, characterized in that the first pinion (34) is carried by that end of the lever (29a) of the correcting system which is opposite to the end coupled with the machine adjustment member (14), and this lever (29a) is pivotally mounted about the member (18) which carries the driving pinion (35), the arrangement being such that the pivotal displacement of this lever (29a) in one direction or in the other thus produces a corresponding rotation of the pinion (34) which is securely attached to the cable (33) for driving the counter (24a).

5. Device in accordance with claim 2, in which the measuring apparatus consists of an electronic counter connected to a pulse sensor comprising a cell (37) for controlling a rotary element (38) which is rigidly fixed to one (18) of the screws for actuating the positioning stop (16) or the shaft which controls this latter, characterized in that this cell (37) is carried by the end of the lever (29b) of the correcting system opposite to the end which is coupled with the machine adjustment member (14), and this lever (29b) is pivotally mounted about the member (18) which carries to rotary element (38) controlled by said cell (37), the arrangement being such that the pivotal displacement of this lever (29b) in one direction or in the other thus produces a corresponding angular displacement of the cell (37) with respect to the rotary element (38) which is controlled by this latter.

6. Machine-tool for sheet-metal forming or shearing, provided with a gauge setting device comprising a measuring apparatus (24, 24a) which is suited to indicate the distance of the adjustable stop (16) for positioning the metal sheet to be machined with respect to a reference plane such as the folding or shearing plane, which is capable of being displaced at the time of operation of the system for adjusting the machine, characterized in that this gauge setting device corresponds to that which forms the subject of one of the preceding claims.

**Patentansprüche**

1. Massanzeigevorrichtung für Werkzeugmaschinen zum Formen oder Schneiden von Blechen, mit einem Messgerät (24, 24a) für die Anzeige des Abstandes des verstellbaren Positionsanschlages (16) des zu bearbeitenden Bleches in bezug auf eine Bezugsebene, wie zum Beispiel die Falt- oder Schneideebene, das bei Betätigung des Einstellsystems (14) der Maschine verschiebbar ist, dadurch gekennzeichnet, dass diese Anzeigevorrichtung ein Korrektursystem aufweist für die Wirkung einer Verschiebung der Bezugsebene mit mechanischen Vorrichtungen (29, 19, 30, 31; 33, 34, 35, 18), die mit dem Teil der Einstellung des Spiels zwischen den Werkzeugen (4, 5) der Maschine verbunden sind und direkt oder indirekt auf ein Element der Verbindungseinrichtungen oder Übertragungseinrichtungen für die gegebenen Grössen zwischen dem Teil (20) zur Betätigung des Positionsanschlages (16) und dem Messgerät (24, 24a) so wirken kann, dass die Eichung des letzteren automatisch richtiggestellt wird.

2. Vorrichtung nach Anspruch 1, dadurch gekennzeichnet, dass das Korrektursystem einen um eine feststehende Achse (19) schwenkbaren Hebel (29) aufweist, dessen eines Ende mit Hilfe eines Schwingmechanismus (30, 31) an die Drehwelle (14) mit dem Einstellteil der Werkzeuge (4, 5) gekuppelt ist, während sein gegenüberliegendes Ende mit den Verbindungsvorrichtungen oder Vorrichtungen zur Übertragung gegebener Grössen zwischen dem Betätigungsteil (20) für den Positionsanschlag (16) und dem Messgerät (24) verbunden ist.

3. Vorrichtung nach Anspruch 2, bei dem das Messgerät aus einem mechanischen Zählwerk besteht, dessen Eingangswelle (25) mit der Drehwelle (19) des Betätigungsteiles (20) des Positionsanschlages (16) durch einen Riemen oder ähnliches verbunden ist, dadurch gekennzeichnet, dass der Hebel (29) des Korrektursystems schwenkbar um die Welle (19) des Betätigungsteiles (20) des Positionsanschlages (16) gelagert ist, und sein Ende, das jenem mit dem Einstellteil der Maschine verbundenen gegenüberliegt, zwei Rollen trägt, die die Spannung der beiden Riementeile (26a, 26b) gewährleisten, wobei die Anordnung so ist, dass die Schwenkbewegung des Hebels (29) in die eine oder andere Richtung eine entsprechende Drehung der Eingangswelle (25) des Zählwerkes (24) bewirkt.

4. Vorrichtung nach Anspruch 2, bei der das Messgerät aus einem mechanischen Zählwerk (24a) besteht, das durch ein elastisches Kabel mit der Drehwelle (19) des Betätigungsteiles (20) des Positionsanschlages (16) verbunden ist, das fest verbunden ist mit einem Zahnrad (34), welches mit einem von einer Mitnehmerschraube (18) des Positionsanschlages (16) oder deren Steuerwelle getragenen Mitnehmerzahnrad (35) in Eingriff steht, dadurch gekennzeichnet, dass das erste Zahnrad (34) von jenem Ende des Hebels (29a) des Korrektursystems getragen wird, das jenem gegenüberliegt, welches mit dem Einstellteil (14) der Maschine verbunden ist, und dass der Hebel (29a) drehbar um den das Mitnehmerzahnrad (35) tragende Teil (18) schwenkbar gelagert ist, wobei die Anordnung so ist, dass die Schwenkbewegung des Hebels (29a) in die eine oder andere Richtung somit eine entsprechende Drehung des mit dem Mitnehmerkabel (33) des Zählwerkes (24a) fest verbundenen Zahnrades (34) bewirkt.

5. Vorrichtung nach Anspruch 2, bei dem das Messgerät aus einem mit einem Impulsgeber verbundenen elektronischen Zählwerk besteht, welcher eine Zelle (37) umfasst, die ein mit einer Mitnehmerschraube (18) des Positionsanschlages (16) oder deren Steuerwelle fest verbundenes Drehelement (38) steuert, dadurch gekennzeichnet, dass die Zelle (37) von jenem Ende des Hebels (29b) des Korrektursystems getragen wird, das jenem mit dem Einstellteil (14) der Maschine verbundenen gegenüberliegt, und dass der Hebel (29a) schwenkbar um den Teil (18) gelagert ist, der das von der Zelle (37) gesteuerte Drehelement trägt, wobei die Anordnung so ist, dass die Schwenkbewegung des Hebels (29b) in die eine oder andere Richtung somit eine entsprechende Winkelverschiebung der Zelle (37) in bezug auf das von ihr gesteuerte Drehelement (38) bewirkt.

6. Werkzeugmaschine zum Formen oder Schneiden von Blechen mit einer Massanzeigevorrichtung umfassend ein Messgerät (24, 24a) zur Anzeige des Abstandes des verstellbaren Positionsanschlages (16) des zu bearbeitenden Bleches in bezug auf eine Bezugsebene, wie zum Beispiel die Falt- oder Schneideebene, das bei Betätigung des Einstellsystems der Maschine verschiebbar ist, dadurch gekennzeichnet, dass die Anzeigevorrichtung mit jener konform ist, die Gegenstand eines der vorhergehenden Ansprüche ist.

# Fig:1

# Fig:2

# Fig:3

0 022 403

Fig:4

Fig:5

# Fig. 6